**Europäisches Patentamt**

**European Patent Office**

**Office européen des brevets**

(19)

(11) Veröffentlichungsnummer: **0 116 273**
**A1**

(12) ## EUROPÄISCHE PATENTANMELDUNG

(21) Anmeldenummer: **84100100.1**

(22) Anmeldetag: **07.01.84**

(51) Int. Cl.³: **C 09 D 11/00**
**G 09 F 3/00**

(30) Priorität: **14.01.83 DE 3301038**
**04.03.83 DE 3307622**

(43) Veröffentlichungstag der Anmeldung:
**22.08.84 Patentblatt 84/34**

(84) Benannte Vertragsstaaten:
**AT BE CH DE FR GB LI NL**

(71) Anmelder: **Brück, Karl-Heinz**
**Gutleutstrasse 185**
**D-6000 Frankfurt (Main) 1(DE)**

(72) Erfinder: **Brück, Karl-Heinz**
**Gutleutstrasse 185**
**D-6000 Frankfurt (Main) 1(DE)**

(74) Vertreter: **Lotterhos, Hans Walter, Dr.-Ing.**
**Lichtensteinstrasse 3**
**D-6000 Frankfurt am Main 1(DE)**

(54) **Markierungsmittel für Textilien, insbesondere für Teppiche, und Verfahren zu deren Herstellung und Anwendung.**

(57) Zur Kennzeichnung von Teppichen sind Markierungsflüssigkeiten bekannt, die eine unsichtbare Schrift ergeben, die im UV-Licht fluoresziert; die fluoreszenzfähige Komponente ist ein wasserlöslicher optischer Aufheller, der trotz Fixierungsunterstüzung mittels einer eingetrockneten Copolymeren-Dispersion nicht wasserfest auf der Faser haftet.

Gemäß der Erfindung werden für eine unsichtbare, sicher haftende Markierung Pigmente verwendet, die im UV- oder im Röntgenlicht durch Fluoreszenz direkt oder durch ihre ausschließliche Wirkung als Röntgenkontrastmittel nur indirekt wahrnehmbar sind. Einige der Pigmente können auf/in der Textilfaser durch chemische Reaktion erzeugt werden. Für eine Markierung, die ausschließlich durch Röntgenkontrast erkennbar ist, können als Pigment auch Glas- oder Metallpulver Anwendung finden, aber auch Lösungen röntgenkontrastgebender Elemente. Die haft- und waschfeste Bindung der Pigmentpartikeln an die Faser wird durch thermoplastische Kunststoffpartikeln bzw. zu einem Film härtende Kunstharz-, Wasserglas- oder Silikonlösungen bewirkt bzw. unterstützt.

EP 0 116 273 A1

Croydon Printing Company Ltd.

## Markierungsmittel für Textilien, insbesondere für Teppiche, und Verfahren zu deren Herstellung und Anwendung

Die Erfindung betrifft ein nach seiner Anwendung bei natürlichem oder diesem entsprechenden künstlichen Licht nicht sichtbares Markierungsmittel für Textilien, insbesondere für wertvolle Orientteppiche und Gobelins, aber auch für andere Gegenstände, insbesondere Kunstgegenstände.

Seit Jahren wächst der Bedarf an Kennzeichnungsmitteln für die Registrierung und Identifizierung von Gegenständen der oben bezeichneten Arten. Besonders soll die Anwendung derartiger Markierungsmittel mithelfen, das Absetzen von Diebesgut zu erschweren - und damit Diebstählen vorzubeugen - und gestohlenes Gut als solches erkennen und zuordnen zu können. Sichtbare Farbmarkierungen sind allerdings meist sehr unerwünscht. Deswegen wurden in der DE-AS 28 22 316 und der DE-AS 29 18 487 Markierungsflüssigkeiten für Orientteppiche vorgeschlagen, die im Gemisch mit einer Acrylat-Copolymer-Dispersion und gegebenenfalls einem wasserverdünnbaren Melaminharz einen mit der Wollfaser waschecht fixierenden optischen Aufheller enthalten, welche Flüssigkeiten eine im Tageslicht unsichtbare Schrift ergeben, die bei Beleuchtung mit UV-Licht sichtbar fluoresziert.

In der praktischen Anwendung hat sich gezeigt, daß diese bekannten Markierungsflüssigkeiten die erstrebte Waschechtheit letztlich nicht sicher gewährleisten. Dies hängt hauptsächlich mit der Wasserlöslichkeit der vorgeschlagenen optischen Aufheller zusammen, und damit.

daß derartige Aufheller fast immer nur für eine bestimmte Materialart des zu markierenden Gewebes eine waschechte Fixierung im Sinne der Färbereitechnik (Substantivität) ergeben. Die für die Markierung mit ein und derselben Markierungsflüssigkeit nach dem Stand der Technik vorgesehenen Gewebe sind jedoch aus uneinheitlichen Materialien wie Wolle, Wolle-Baumwolle-Gemische oder Seide gefertigt. Selbst wenn ein Fixieren auf unterschiedlichen Materialien von der chemischen Konstitution des Aufhellers her möglich wäre, ist der Fixierungsvorgang unter den praktischen Anwendungsbedingungen (Fixierung bei Raumtemperatur ohne Vorbehandlung des Teppichs bei gleichzeitiger Einhüllung der Gewebefasern durch den Acrylat- und Melaminharzanteil der Markierungsflüssigkeit) sehr erschwert. Im Ergebnis läßt sich ein optischer Aufheller schließlich in aller Regel mehr oder weniger leicht mit Wasser aus dem markierten Untergrund herauslösen, auch wenn er in einem Polyacrylat- und/oder Melaminharz-Film verteilt ist.

Die Aufgabe der Erfindung ist es, einerseits den geschilderten grundsätzlichen Nachteil der Auswaschbarkeit der Markierung, wie sie nach dem Stande der Technik nicht zu vermeiden ist, zu beseitigen und im weiteren einen zusätzlichen Frequenzbereich für die identifizierende Strahlung zur Sichtbarmachung der Markierung zugänglich zu machen.

Beides wird erreicht durch die Anwendung von im UV-Licht bzw. im Röntgenlicht fluoreszierenden, in Wasser und organischen Lösungsmitteln unlöslichen "farblosen" Pigmenten. Die Verwendung von Pigmenten für die unter Normalbedingungen nicht sichtbare Markierung von Textilien (und nicht textiler Gegenstände) ist nicht naheliegend und wurde bisher nicht für möglich gehalten.

Es hat sich gezeigt, daß solche Pigmente, wenn sie in einem Film eines transparenten Kunststoffs eingebettet sind, sehr wohl eine unsichtbare Markierung auf Textilien ergeben. Dieser Effekt erklärt sich teilweise daraus, daß die für die Markierungsmittel gemäß der Erfindung insbesondere vorgesehenen farblosen Pigmente dem menschlichen Auge nur durch ihre feine Pulverisierung weiß erscheinen, jedoch farblos bzw. nahezu unsichtbar werden, wenn sie in den optisch dichteren als Luft und transparenten Kunststoff-Film eingebettet sind.

Wenngleich die Pigmente zur Anwendung gemäß der Erfindung vorzugsweise als weiße Pulver vorliegen, ergeben auch nicht weiße, insbesondere nur schwach farbige Substanzen unsichtbare Markierungen, zumal wenn der Untergrund nicht rein weiß ist, sondern, wie z.B. bei Teppichen, farbig ist und zudem aus relativ dicken Fasern besteht.

Die Pigmente zur Anwendung gemäß der Erfindung können anorganische oder organische sein. Als Beispiel für UV-aktive anorganische Pigmente kommen Zinksilikate mit Manganzusatz und bestimmte (dotierte) Oxide der seltenen Erden in Betracht; als UV-aktive organische Pigmente kommen beispielsweise Substanzen aus der Stoffklasse der Oxazinone oder Terephthalsäureester in Frage; ein im Röntgenlicht fluoreszierendes Pigment ist beispielsweise Calciumwolframat; derartige Pigmente sind in guter Auswahl handelsüblich. Es sei erwähnt, daß bei denjenigen Pigmenten, die im Röntgenlicht fluoreszieren, auch Kathodenstrahlen (bzw. ß-Strahlen) und $\alpha$-Strahlen eine Emission bewirken können. Im Rahmen der vorliegenden Erfindung soll der Begriff Fluoreszenz auch das Phänomen der Phosphoreszenz ("langsam abklingende Fluoreszenz") einschließen.

Die Verwendung der im UV- bzw. Röntgenlicht fluoreszierenden Pigmente bietet eine Reihe praktischer Vorteile. Wegen ihrer Unlöslichkeit in Wasser und organischen Lösungsmitteln lassen sie sich wesentlich schwerer aus dem markierten Gewebe oder von einem markierten anderen Untergrund entfernen als die nach dem Stand der Technik bekannten wasserlöslichen optischen Aufheller. Während die letzteren nur eine bläuliche Fluoreszenzfarbe zeigen, hat man bei den Pigmenten die Möglichkeit, auch rote, orangefarbene, grüne und gelbe Fluoreszenzfarben zu erhalten, wodurch insbesondere auch bei Anwendung von Pigmentmischungen besondere Markierungseffekte zu erreichen sind. Bei Verwendung von Pigmenten im Sinne der Erfindung hat man weiter die Möglichkeit, auf eine bestimmte Wellenlänge der unsichtbaren Strahlung abzustimmen; denn während einige der Pigmente im gesamten Frequenzbereich des UV-Lichtes fluoreszieren, sprechen andere nur auf langwellige UV-Strahlung (z.B. von 360 nm) oder nur auf kurzwellige Strahlung (z.B. von 254 nm) an, während wiederum andere nur bei Anregung mit Röntgenstrahlen (bzw. bei analoger Anregung durch Korpus-

0116273

- 4 -

kularstrahlen) fluoreszieren. Insbesondere bei besonders wertvollen Stücken kann die allein   bzw. zusätzlich im Röntgenlicht erkennbare Markierung von besonderem Wert sein, da die Beschaffung von z.B. Röntgenquellen für potentielle Diebe schwierig sein wird.

Entweder wird von dem unrechtmäßigen Besitzer die unsichtbare Markierung dann überhaupt nicht festgestellt, da sie nur im Röntgenlicht fluoresziert, oder es scheitert der Versuch, die im UV-Licht sichtbare Kennzeichnung durch Übermalung mit einem UV-aktiven Kennzeichnungsmittel unkenntlich zu machen, an der nicht überdeckten, im Röntgenlicht identifizierbaren Markierung, sofern ein ein UV- und ein röntgenaktives Pigment zugleich enthaltendes Markierungsmittel verwendet worden ist.

Das feste Haften der Pigmente auf dem Untergrund wird durch an sich bekannte organische Kunststoffe (Thermoplaste, Elastomere, Duroplaste) bewirkt. Sie dienen als nach ihrer Anwendung unlösliche Bindemittel sowohl für die Pigmentteilchen untereinander als auch für deren Haftung auf dem textilen Untergrund. Sie müssen transparent sein sowohl für die einfallende energiereiche Strahlung als auch für die emittierte Fluoreszenzstrahlung. Unter den zahlreichen handelsüblichen Kunststoffen dieser Art wählt man solche aus, die nach Aufbringen und Trocknen der Markierung gegen Naßwäsche und Chemischreinigung oder Behandlung mit organischen Lösungsmitteln allgemein beständig sind.

Die als Bindemittel wirkenden Kunststoffe, die im Gemisch mit den Pigmenten das Markierungsmittel bilden, können in unterschiedlicher Konstitution vorgegeben sein bzw. werden, so daß flüssige oder pulverige Markierungsmittel erhalten werden, wobei in den flüssigen Anwendungsformen des Markierungsmittels dessen Kunststoffanteil entweder als Kunststoffdispersion oder als Flüssigkeit bzw. in Lösung vorliegt.

Die flüssigen Anwendungsformen des Markierungsmittels gemäß der Erfindung enthalten das Bindemittel vorzugweise als Kunststoffdispersion, wobei der Kunststoff wie auch das fluoreszenzfähige Pigment in einem flüssigen Medium dispergiert sind. Bevorzugtes Dispersionsmittel ist Wasser. Hinsichtlich des Kunststoffes sind die in großer Vielfalt erhaltbaren Polyvinylacetat-Dispersionen hervorzuheben. Beispielsweise ergibt eine wäßrige Polyvinylacetat-Dispersion durch Mischen mit einer wäßrigen Dispersion des fluoreszenzfähigen Pigments eine gebrauchsfertige Markierungsflüssigkeit im Sinne der Erfindung. Ein Zusatz weiterer Bindemittel, etwa von Melaminharzen oder ähnlich wirkenden Substanzen, ist nicht erforderlich. Gegebenenfalls können Hilfsstoffe wie Verdickungsmittel, Netzmittel, Stabilisatoren, Fungizide usw. zugesetzt werden. Das Mischungsverhältnis von Polyvinylacetat-Dispersion (mit etwa 5o Gew.% Feststoffgehalt) zu Pigment liegt vorzugsweise im Bereich 2:1 bis 10:1 bezogen auf die Gewichtseinheit. Nach natürlicher oder erzwungener Verdunstung des Dispersionsmittels ist bereits eine insbesondere an Teppichfasern fest haftende unsichtbare Markierung mit den angewendeten Pigmentpartikeln erzielt. Eine thermische Nachbehandlung , wie unmittelbar nachstehend beschrieben, verfestigt die Bindung der Pigmentpartikeln an den Untergrund.

Wenn extreme Waschfestigkeit und Beständigkeit der Markierung für die Chemischreinigung verlangt ist, die bei wertvollen Teppichen selten (und bei nicht textilen Kunstgegenständen wohl nie) in Frage kommen dürfte, verwendet man für das flüssige Markierungsmittel mit Vorteil eine Vinylacetat-Ethylen-Copolymeren-Dispersion und schließt nach dem Abtrocknen des aufgetragenen Markierungsmittels eine Wärmebehandlung der markierten Stelle von wenigstens 1o Sekunden Dauer und wenigstens 80°C an. Durch die Wärmebehandlung können die Kunststoffmoleküle miteinander vernetzt werden.

Eine weitere technische Lösung zur Bindung der Pigmentpartikeln an den zu markierenden Untergrund liegt in der Anwendung nicht dispergierter solcher organischer Flüssigkeiten als Bindemittel, die nach dem Auftragen des Markierungsmittels zu einem nicht oder nur äußerst schwer in organischen Lösungsmitteln löslichen Film oder Überzug trocknen bzw. aushärten. Als Beispiele für derartige geeignete Bindemittel seien Flüssigkeiten bzw. Lösungen von zunächst niedermolekularen Verbindungen aus den Stoffklassen der Epoxide, Silikone, Polyurethane, Polyester genannt, die durch bekannte Bedingungen bzw. Maßnahmen wie Erwärmung, Luftzutritt, Bestrahlung oder durch Zusatz von Härtern oder Katalysatoren - je nach Stoffklasse - aushärten und in eine unlösliche Form übergehen.

Statt organischer können auch anorganische oder organisch-anorganische Lösungen oder Flüssigkeiten als nicht dispergiertes Bindemittel angewendet werden, beispielsweise eine Wasserglaslösung oder gelöste bzw. flüssige vernetzbare Silikone; letztere sind schon genannt worden.

Für eine pulverige Anwendungsform des Markierungsmittels gemäß der Erfindung wird Pigmentpulver mit pulverförmigem Kunststoff als Bindemittel gemischt. Die Teilchengröße der Kunststoffpartikeln liegt in der Größenordnung wie in kolloiden bis grobdispersen Systemen. Der Kunststoff besteht bevorzugt aus thermoplastischem Material; sehr geeignet ist ein niedrigschmelzendes Polyamid oder Polyvinylacetat. Das Mischungsverhältnis von Kunststoffanteil zu Pigmentanteil des Markierungsmittels liegt günstigerweise zwischen 1:1 und 5:1. Wird ein solches Pulver (z.B. über Schablonen) zur Markierung aufgestäubt (z.B. auf die Unterseite eines Teppichs) und anschließend einer Wärmebehandlung unterworfen, beispielsweise durch ein Bügeleisen, dann überzieht die kurzzeitig entstehende Schmelze den Untergrund (z.B. die Teppichfasern) und bildet nach dem Erkalten eine unsichtbare Markierung im Sinne der Erfindung.

Es ist auch möglich, zunächst eine trockene pulverförmige Markierungsmischung herzustellen und zu lagern, um aus dieser bei Bedarf durch Flüssigkeitszusatz eine liquide Dispersion als Markierungsmittel zu erhalten. Beispielsweise kann man pulverförmiges dispergierbares Polyvinylacetat mit Pigmentpulver trocken mischen und aufbewahren. Diese Mischung ist direkt als Markierungsmittel anwendbar. Durch späteren Zusatz von Wasser und kräftiges Rühren oder Schütteln ist die trockene in eine flüssige Anwendungsform des Markierungsmittels überführbar, in dem sowohl der Kunststoff- als auch der Pigmentanteil als liquide Dispersion vorliegen. Nach der Verdunstung des Dispergierungsmittels kann vorteilhafterweise eine Wärmebehandlung wie zuvor beschrieben nachfolgen.

Der Erfindungsgedanke, im Röntgenlicht fluoreszierende Pigmente für eine unter normalen Lichtverhältnissen nicht sichtbare Markierung anzuwenden, bewirkt, wie ausgeführt, eine erhebliche Verbesserung der Fälschungssicherheit und Identifizierung von Kunstgegenständen, insbesondere von Teppichen.

In Weiterentwicklung des Erfindungsgedankens, Röntgenlicht zur Erkennbarmachung einer Markierung anzuwenden bzw. anwenden zu müssen, kann potentiellen Dieben das Auffinden einer Markierung sowie deren anschließendes Unleserlichmachen durch "Übermalen" nun noch weiter erschwert oder gar unmöglich gemacht werden, wenn ein Markierungsmittel verwendet wird, das eine Substanz enthält oder aus einer solchen besteht, die nach Anwendung des Markierungsmittels weder im normalen Licht sichtbar ist, noch im UV- oder Röntgenlicht fluoresziert, für Röntgenstrahlen aber als positives Kontrastmittel wirkt und deswegen nicht mehr direkt, sondern nur noch indirekt, z.B. auf einem Röntgenfilm oder Röntgenschirm erkannt und gelesen werden kann.

Nicht fluoreszenzfähige röntgenkontrastgebende Substanzen sind bekannt. Es handelt sich dabei um Verbindungen, die Elemente höherer Ordnungszahl, insbesondere höher als 30, enthalten und Röntgenquanten gut absorbieren, beispielsweise Zink, Jod, Barium, Wolfram, Blei, Wismut.

In Form von Pigmentpartikeln können derartige weder im UV- noch im Röntgenlicht fluoreszierende, jedoch röntgenkontrastgebende Verbindungen in gleicher Weise auf den zu markierenden Untergrund aufgebracht und dort gehalten werden, wie zu den fluoreszenzfähigen Pigmentpartikeln weiter oben beschrieben worden ist. Ein für Markierungszwecke gemäß der Erfindung nicht durch Anregung mit UV- oder Röntgenlicht fluoreszierendes Pigment, "Kontrastpigment" oder "Röntgenpigment", ist beispielsweise Bariumsulfat, das für Röntgenstrahlen ein gutes Absorptionsvermögen besitzt.

Als Kontrastpigment oder Röntgenpigment hervorragend geeignet sind zu einem feinen Pulver zermahlene Gläser mit einem hohen Gehalt an einem Röntgenstrahlen gut absorbierenden Element. Beispielsweise lieferten mittels eines klinischen Röntgengeräts hergestellte Röntgenfilmaufnahmen eines Teppichs, der mit einem Markierungsmittel, das feinst gemahlenes Bleiglas mit einem Bleigehalt von rund 60 Gew.% enthielt, eine hervorragende Wiedergabe der aufgetragenen Markierungssymbole. Die Markierung war auch bei vergleichsweise hoher Verdünnung des Glases deutlich zu lesen.

Für die Versuche waren zwei Ansätze des Markierungsmittels hergestellt worden. Für den einen Ansatz waren 2 g des Glaspulvers mit 3 g einer wäßrigen Polyvinylacetat-Dispersion, deren Polyvinylacetat-Feststoffgehalt 50 Gew.% betrug, und 2 g Wasser zu einer Dispersion gerührt worden; für den anderen Ansatz waren statt 2 g Wasser 9 g Wasser verwendet und das Volumen halbiert worden. Die so erhaltenen Ansätze wurden dann in Form von Ziffern auf die Rückseite eines Teppichs aufgetragen, wobei die beschriftete Fläche jeweils etwa 100 cm² betrug, d.h., daß entweder ungefähr 2 g oder ungefähr 1 g des Glases auf 100 cm² Teppichfläche verteilt worden waren. Nach dem Abtrocknen des Markierungsmittels war dieses auf dem Teppich dann weder im sichtbaren noch im UV-Licht oder im direkten Röntgenlicht sichtbar. Die jeweils erhaltenen Röntgenfilmaufnahmen zeigten die Beschriftung jedoch klar und kontrastreich.

In gleich günstiger Weise sind auch feine Pulver von Röntgenstrahlen sehr gut absorbierenden Metallen verwendbar. Zum Beispiel können Edelmetalle, besonders Platin, in feinster Verteilung, aber auch feinstes Wolframpulver Verwendung finden.

Für die Markierung mit nicht fluoreszenzfähigen, röntgenkontrastgebenden Markierungsmitteln ist es nicht in jedem Fall erforderlich, wasserunlösliche Pigmente zu verwenden, deren Vorteil im Vergleich mit den wasserlöslichen optischen Aufhellern als im UV-Licht fluoreszierende Substanz der Markierungsmittel nach dem Stande der Technik eingangs herausgestellt worden ist. Zu Zwecken der Markierung, die ausschließlich durch ihre Röntgenkontrast-Wirkung erkannt und gelesen werden kann, kann es durchaus genügen, gegebenenfalls auch lösliche Verbindungen zu verwenden, ohne größere Gefahr zu laufen, daß die Markierung von einem Unbefugten erkannt und entfernt wird. Der Grund liegt in der aufwendigen Technik, eine derartige, weder im UV- noch im Röntgenlicht fluoreszierende markierte

- 9 -

Stelle überhaupt aufzufinden. Hierzu müßte das markierte Stück, beispielsweise ein großer Teppich, mit einer Röntgenkamera in kleinen Sektoren abgetastet und gegebenenfalls eine sehr große Zahl von Röntgenaufnahmen angefertigt werden. Abgesehen davon, daß potentiellen Dieben die entsprechende Ausrüstung fehlen wird, wäre das Untersuchungsverfahren zu aufwendig. Und um z.B. einen großen Teppich alleine wegen des Verdachts, er könnte möglicherweise mit einem herauswaschbaren "Röntgenmarkierungsmittel" gekennzeichnet sein, vorsorglich insgesamt zu waschen oder einer chemischen Reinigung zu unterziehen, um das Markierungsmittel zu entfernen, erscheint gleichfalls eine zu aufwendige Maßnahme zu sein.

Für den Anwender einer durch Röntgenstrahlen nur indirekt erkennbaren Markierung mag es allerdings vorteilhaft sein, eine im UV-Licht, gegebenenfalls auch im Röntgenlicht fluoreszierende zusätzliche Markierung zugleich als Leitmarkierung zum schnellen Auffinden der Markierung durch das "Röntgenmarkierungsmittel" anzubringen, indem beide Markierungen in einem vorbestimmten geomertischen Verhältnis zueinander angeordnet werden.

Insbesondere bei stark saugendem Untergrund können in Wasser und/oder organischen Lösungsmitteln lösliche röntgenkontrastgebende Substanzen Verwendung finden. Ein "Versiegeln" der markierten Stellen nach dem Eintrocknen des aufgebrachten Markierungsmittels mit einer Flüssigkeit oder Lösung, die zu einem nicht sichtbaren Film oder Belag aushärtet bzw. aushärtbar ist, verringert die Entfernbarkeit der Markierung. Außer Kunststoff- bzw. Kunstharzlösungen als Vertreter für einen organischen Siegelfilm sind auch Wasserglaslösungen als Vertreter für einen anorganischen Siegelfilm und Lösungen eines vernetzbaren Silikons für einen organisch-anorganischen Siegelfilm möglich. Im übrigen kann in vorteilhafter Weise auch so verfahren werden, die lösliche röntgenkontrastgebende Substanz direkt in einer filmbildenden Lösung gelöst als Markierungsmittel anzuwenden.

Als wasserlösliche röntgenkontrastgebende Verbindung kommt beispielsweise Bariumchlorid in Frage. In diesem Fall bestünde das Markierungsmittel für eine Markierung, die weder im UV- noch im

0116273

Röntgenlicht fluoresziert und für Röntgenstrahlen als Kontrastmittel wirkt, aus der Bariumchloridlösung, und zwar entweder als wäßrige Lösung des Bariumchlorids oder als Lösung des Bariumchlorids in der zu einem Film aushärtenden Flüssigkeit.

Als wasserunlösliches Pigment, das weder im UV- noch im Röntgenlicht fluoresziert und für Röntgenstrahlen als Kontrastmittel wirkt, ist im Sinne der Erfindung zur Markierung insbesondere von Teppichen Bariumsulfat sehr geeignet. Statt dieses als Pigment wie weiter oben beschrieben mittels eines Bindemittels fest mit den Fasern von Textilien zu verbinden, kann das Pigment mit hervorragender Haftfestigkeit innerhalb der Faser bzw. der Textur des zu markierenden Textils in situ gebildet werden. Wie bekannt, reagieren eine Bariumionen enthaltende Lösung und eine Sulfationen enthaltende Lösung unter Ausfällung von wasserunlöslichem Bariumsulfat. Wird beispielsweise ein Teppich nun zuerst mit einer Bariumchloridlösung beschriftet, die in die Fasern und die Gewebetextur des Teppichs eingesaugt wird, und anschließend mit einer Natriumsulfatlösung überschriftet, bildet sich zwischen und innerhalb der Fasern feinteiliges Bariumsulfat aus, das bereits sicher haftet. Welche Lösung zuerst angewendet wird, ist ohne Belang. Ein Versiegeln der markierten Stelle mit einer aushärtenden oder aushärtbaren Lösung kann angeschlossen werden. Statt den Siegelfilm nachträglich aufzubringen, kann aber auch so verfahren werden, daß man als Lösungsmittel wenigstens für eine der Komponenten, die das Pigment in situ erzeugen, eine aushärtende oder aushärtbare Lösung verwendet. Dieses Vorgehen bietet den Vorteil, daß das Pigment noch stärker an den, insbesondere jedoch in den Fasern des markierten Stückes gebunden ist.

Das soeben beschriebene Verfahren zur Markierung von Textilien durch die in situ-Erzeugung des mittels Röntgenstrahlung nur indirekt erkennbaren Pigments ist selbstverständlich nicht auf das gegebene Ausführungsbeispiel für Bariumsulfat als Pigment beschränkt.

Nach diesem in situ-Verfahren kann übrigens auch mit solchen Pigmenten markiert werden, die im UV- bzw. im Röntgenlicht fluoreszieren.

Sofern die Markierungsmittel gemäß der Erfindung jedoch solche sind, die die nach Anwendung des Markierungsmittels bei natürlichem oder diesem entsprechenden künstlichen Licht nicht wahrnehmbare Pigmente bereits enthalten, sind als Pigment auch Pigmentgemische zu verstehen, die einen Anteil an Partikeln enthalten, die im UV- bzw. im Röntgenlicht fluoreszieren, und einen Anteil an Partikeln, die alleine indirekt durch ihre Wirkung als positive Kontrastmittel für Röntgenstrahlen wahrnehmbar sind.

Bei Verwendung der Markierungsmittel gemäß der Erfindung und bei den Verfahren zur Markierung gemäß der Erfindung finden keine chemischen Reaktionen, weder der Pigmentpartikeln oder der Lösungen, die die röntgenkontrastgebenden Elemente enthalten, noch der Bindemittel für die Pigmentpartikel oder der versiegelnden Lösungen mit dem markierten Material statt, so daß auch wertvolle Teppiche schonend und dauerhaft mit einer unsichtbaren Markierung versehen werden können, wobei die Markierung mittels UV- oder Röntgenlicht durch Fluoreszenz, gegebenenfalls auch Phosphoreszenz, direkt und/oder durch Röntgenlicht zufolge der Röntgenkontrastwirkung des Markierungsmittels indirekt erkannt und gelesen werden kann.

- 12 -

Patentansprüche

1. Markierungsmittel für Textilien, insbesondere für Teppiche, bestehend aus oder enthaltend eine bei natürlichem oder diesem entsprechenden künstlichen Licht nach Anwendung des Markierungsmittels nicht wahrnehmbare, bei Einstrahlung energiereicherer als sichbarer Strahlung sichtbar fluoreszierende Substanz, dadurch gekennzeichnet, daß die fluoreszenzfähige Substanz ein in Wasser und oragnischen Lösungsmitteln unlösliches Pigment ist.

2. Markierungsmittel nach Anspruch 1, gekennzeichnet durch eine Mischung verschiedener fluoreszenzfähiger Pigmente.

3. Markierungsmittel nach Anspruch 1 oder 2, dadurch gekennzeichnet, daß das Pigment im UV-Licht fluoresziert.

4. Markierungsmittel nach Anspruch 1 oder 2, dadurch gekennzeichnet, daß das Pigment im Röntgenlicht fluoresziert.

5. Markierungsmittel nach Anspruch 2, dadurch gekennzeichnet, daß von den Pigmenten wenigstens eine Art im UV-Licht und wenigstens eine Art im Röntgenlicht fluoresziert.

6. Markierungsmittel für Textilien, insbesondere für Teppiche, bestehend aus oder enthaltend eine bei natürlichem oder diesem entsprechendem künstlichen Licht nach Anwendung des Markierungsmittels nicht wahrnehmbare Substanz, dadurch gekennzeichnet, daß die Substanz weder im UV- noch im Röntgenlicht fluoresziert und für Röntgenstrahlen die Eigenschaft eines positiven Kontrastmittels hat (Kontrastsubstanz).

7. Markierungsmittel nach Anspruch 6, dadurch gekennzeichnet, daß die Kontrastsubstanz ein Pigment ist.

8. Markierungsmittel nach Anspruch 7, dadurch gekennzeichnet, daß das Pigment ein feinpulverisiertes Glas ist.

9. Markierungsmittel nach Anspruch 7, dadurch gekennzeichnet, daß das Pigment ein feines Metallpulver ist.

10. Markierungsmittel nach einem der Ansprüche 1 bis 5 und nach einem der Ansprüche 7 bis 9, gekennzeichnet durch eine Mischung wenigstens einer Art von fluoreszenzfähigen Pigmenten und wenigstens einer Art von nicht fluoreszenzfähigen Pigmenten.

11. Markierungsmittel nach einem der Ansprüche 1 bis 5 sowie 7 bis 10, gekennzeichnet durch einen Anteil des Markierungsmittels an einem organischen Kunststoff als Bindemittel für das Pigment mit einer Teilchengröße für die Partikeln des Bindemittels in der Größenordnung wie in kolloid- bis grobdispersen Systemen.

12. Markierungsmittel nach Anspruch 11, gekennzeichnet als pulverförmige Mischung des Pigments und des Bindemittels.

13. Markierungsmittel nach Anspruch 12, gekennzeichnet durch ein niedrigschmelzendes Polyamid oder Polyvinylacetat als Bindemittel.

14. Markierungsmittel nach Anspruch 12 oder 13, dadurch gekennzeichnet, daß es mittels eines Dispersionsmittels in eine liquide Dispersion überführbar ist.

15. Markierungsmittel nach Anspruch 11, gekennzeichnet als liquide Dispersion des Pigments und des Bindemittels.

16. Markierungsmittel nach Anspruch 15, dadurch gekennzeichnet, daß die Bindemittel-Dispersion eine wäßrige Polyvinylacetat-Dispersion oder eine Polyvinylacetat-Copolymer-Dispersion mit insbesondere Ethylen als der Copolymerbildner ist.

17. Markierungsmittel nach einem der Ansprüche 1 bis 10, gekennzeichnet durch einen Anteil des Markierungsmittels an einer Lösung oder Flüssigkeit als Bindemittel entweder für ein Pigment oder/und für eine in dem Markierungsmittel gelöst enthaltene Kontrastsubstanz, welche Lösung oder Flüssigkeit nach der Anwendung des Markierungsmittels zu einem in Wasser und organischen Lösungsmitteln nicht oder nur äußerst schwer löslichen Film aushärtet oder aushärtbar ist.

18. Verfahren zur Anwendung des Markierungsmittels nach Anspruch 12 oder 13, dadurch gekennzeichnet, daß zur Fixierung des Markierungsmittels nach dessen Aufbringung die Aufbringungsstelle gegebenenfalls unter Anwendung mechanischen Drucks bis zum Schmelzen des Bindemittels erhitzt wird.

19. Verfahren zur Anwendung des Markierungsmittels nach Anspruch 15 oder 16, dadurch gekennzeichnet, daß zur Fixierung des Markierungsmittels nach dessen Anwendung und Trocknung die Aufbringungsstelle für wenigstens 10 Sekunden auf wenigstens 80°C erhitzt wird.

2o. Verfahren zur Markierung von Textilien, insbesondere von Teppichen mit einer Kontrastsubstanz nach Anspruch 6, gekennzeichnet durch das Anfeuchten oder Tränken des Textils mit einer Lösung, die wenigstens die Kontrastsubstanz enthält.

21. Verfahren zur Markierung von Textilien, insbesondere von Teppichen, mit einem im UV- bzw. Röntgenlicht fluoreszierenden Pigment oder mit einem im UV- und Röntgenlicht nicht fluoreszierenden Pigment als Röntgenkontrastsubstanz, gekennzeichnet durch die Bildung des Pigments an den oder innerhalb der Fasern bzw. der Textur des Textils, indem man auf das Textil nacheinander die Lösung einer Verbindung A und einer Verbindung B aufbringt, wobei die Verbindungen A und B miteinander zu dem Pigment reagieren.

22. Verfahren nach Anspruch 21, dadurch gekennzeichnet, daß die Lösung der Verbindung A und/oder die Lösung der Verbindung B als Lösungsmittel eine zu einem in Wasser und organischen Lösungsmitteln nicht oder nur äußerst schwer löslichen Film aushärtende oder aushärtbare Lösung oder Flüssigkeit aufweist.

23. Verfahren nach einem der Ansprüche 18 bis 22, gekennzeichnet durch das sich anschließende Aufbringen einer zu einem in Wasser und organischen Lösungsmitteln nicht oder nur äußerst schwer löslichen Film aushärtende oder aushärtbare Lösung oder Flüssigkeit auf die markierte Stelle.

24. Markierungsmittel nach Anspruch 17 oder Verfahren nach Anspruch 22 oder 23, gekennzeichnet durch eine Kunstharzlösung als die filmbildende Lösung oder Flüssigkeit.

25. Markierungsmittel nach Anspruch 17 oder Verfahren nach Anspruch 22 oder 23, gekennzeichnet durch eine Wasserglaslösung als die filmbildende Lösung oder Flüssigkeit.

26. Markierungsmittel nach Anspruch 17 oder Verfahren nach Anspruch 22 oder 23, gekennzeichnet durch eine Silikonlösung als die filmbildende Lösung oder Flüssigkeit.

27. Verwendung der Markierungsmittel nach einem der Ansprüche 1 bis 17 und 24 bis 26 zur Markierung von Textilien, insbesondere Teppichen, ohne oder unter Anwendung eines Verfahrens nach einem der Ansprüche 18 bis 26.

28. Textilien, insbesondere Teppiche, markiert mit einem Markierungsmittel nach einem der Ansprüche 1 bis 17 und 24 bis 26, ohne oder unter Anwendung eines Verfahrens nach einem der Ansprüche 18 bis 26.

Europäisches
Patentamt

# EUROPÄISCHER RECHERCHENBERICHT

EP 84 10 0100

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| D,A | DE-A-2 918 487 (M. JEIKNER)<br>* Ansprüche; Seite 4, Zeilen 1-5 *<br><br>----- | 1 | C 09 D 11/00<br>G 09 F 3/00 |

RECHERCHIERTE
SACHGEBIETE (Int. Cl. 3)

C 09 D
G 09 F

Der vorliegende Recherchenbericht wurde für alle Patentansprüche erstellt.

| Recherchenort | Abschlußdatum der Recherche | Prüfer |
|---|---|---|
| DEN HAAG | 08-05-1984 | DE ROECK R.G. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82